# EUROPÄISCHE PATENTANMELDUNG

(11) **EP 1 126 254 A1**
(43) Veröffentlichungstag der Anmeldung: **22.08.2001**
(21) Anmeldenummer: 00102991.7
(22) Anmeldetag: 14.02.2000
(51) Int. Cl.: G01H 1/00

(54) **Rotationsmaschine und Verfahren zur Erfassung von Schwingungen**

(71) Anmelder: SIEMENS AKTIENGESELLSCHAFT, 80333 München (DE)
(72) Erfinder: Regnery, David, Dipl.-Ing., 47228 Duisburg (DE); Intichar, Lutz Dr., 45472 Mühlheim (DE)

(57) **Zusammenfassung**

Die Erfindung betrifft eine Rotationsmaschine (10) mit einem Gehäuse (11) und einem Rotor (12) mit Laufschaufeln (14), deren Spitzen über ein Deckband (15) miteinander verbunden sind. Erfindungsgemäß ist das Deckband (15) zur Erfassung von Schwingungen mit einer magnetisch erkennbaren Markierung (20) versehen, die über mindestens einen Sensor (18) abgelesen wird. Die Erfindung betrifft weiter ein Verfahren zur berührungslosen Erfassung von Schwingungen über ein Deckband (15) mit einer derartigen magnetischen Markierung (20).

## Beschreibung

Die vorliegende Erfindung betrifft eine Rotationsmaschine mit einem Gehäuse und einem in dem Gehäuse aufgenommenen Rotor, der mit einer Anzahl von in Umfangsrichtung nebeneinander liegenden Schaufeln versehen ist, deren Spitzen über ein Deckband miteinander verbunden sind. Sie betrifft weiter ein Verfahren zur berührungslosen Erfassung von Schwingungen von Schaufeln an einem Rotor in einer Rotationsmaschine, deren Spitzen über ein Deckband miteinander verbunden sind.

Eine derartige Maschine sowie ein derartiges berührungsloses Verfahren sind aus dem Aufsatz "A Review of Analysis Techniques for Blade Tip-Timing Measurements" von S. Heath und M. Imregun, ASME-Veröffentlichung 97-GT-218, vorgestellt auf der International Gas Turbine & Aeroengine Congress & Exhibition, Orlando, Florida, 02. bis 05. Juni 1997 bekannt. Dieser Aufsatz beschreibt eine berührungslose Schwingungserfassung mittels Lasern bei Einzelschaufeln ohne Deckblatt. Eine derartige berührungslose Schwingungserfassung ist auch aus der US 4,790,189 bekannt. Die Spitzen der einzelnen Schaufeln werden hierbei mittels Magnetsensoren erfaßt.

Die bekannten Rotationsmaschinen und Verfahren ermöglichen eine hochgenaue Erfassung der Vorbeiflugzeitpunkte aller Schaufeln einer zu überwachenden Stufe einer Rotationsmaschine. Für die Erfassung des Vorbeiflugzeitpunktes ist eine eindeutig der Schaufel zugeordnete Geometrie erforderlich, die bei freistehenden Einzelschaufeln stets gegeben ist. Viele Schaufelauslegungen beinhalten allerdings integrale oder aufgebrachte Deckbänder zur Verminderung aerodynamischer Verluste. Der Begriff Deckband ist hier nicht einschränkend zu verstehen, sondern dient als Sammelbegriff für alle Verbindungen von Schaufeln untereinander im Bereich der Spitze. Die Geometrie derartiger Deckbänder ist in der Regel nicht so strukturiert, daß ein Sensor ein ausreichendes Signal zur Erfassung von Schaufelschwingungen ablesen kann.

Es ist möglich, das Deckband mechanisch zu verändern, beispielsweise Erhöhungen aufzubringen oder eine Riffelung einzufräsen. Derartige Veränderungen können die Funktion der Deckbänder beeinträchtigen, deren Integrität stören oder eine nicht ausreichende Standzeit aufweisen.

Aufgabe der vorliegenden Erfindung ist es daher, eine Rotationsmaschine und ein Verfahren bereitzustellen, die eine zuverlässige, berührungslose Erfassung der Schwingungen von Schaufeln ermöglichen, deren Spitzen über ein Deckband miteinander verbunden sind.

Erfindungsgemäß wird diese Aufgabe bei einer Rotationsmaschine der eingangs genannten Art dadurch gelöst, daß das Deckband mit einer magnetisch erkennbaren Markierung versehen ist und mindestens ein Sensor zum Ablesen dieser magnetisch erkennbaren Markierung vorgesehen ist.

Die erfindungsgemäß magnetisch erkennbare Markierung kann berührungslos abgetastet werden und stellt eine eindeutig den Schaufeln zugeordnete Geometrie bereit. Aus dem von dem mindestens einen Sensor abgelesenen Signal können anschließend die Schwingungen der einzelnen Schaufeln errechnet werden. Als geeignete Sensoren können Spulen oder Hallsensoren verwendet werden.

Vorteilhafte Weiterbildungen und Ausgestaltungen der Erfindung gehen aus den abhängigen Ansprüchen hervor.

Vorteilhaft verläuft die Markierung in Umfangsrichtung des Deckbands periodisch. Dies führt zu einem sich ständig wiederholenden Signal. Schwingungen des Deckbands in Umfangsrichtung werden durch eine Phasenverschiebung des abgelesenen Signals zuverlässig erkannt.

In vorteilhafter Weiterbildung ist die Markierung aus einzelnen, sich wiederholenden Abschnitten zusammengesetzt. Dies ermöglicht eine einfache und kostengünstige Herstellung.

Nach einer vorteilhaften Ausgestaltung ändert sich die Markierung in Querrichtung des Deckbands fortlaufend ohne jede Wiederholung derart, daß der Sensor zu jeder Querposition des Deckbands genau ein Signal abliest. Diese Änderung der Markierung in Querrichtung ermöglicht eine Erfassung von Schwingungen des Deckbands in Querrichtung. Die Markierung weist voneinander unabhängige Informationsanteile in Umfangs- und Querrichtung auf. Daher können Schwingungen in Querrichtung und Schwingungen in Umfangsrichtung unabhängig voneinander erkannt werden. Die fortlaufende Änderung der Markierung in Querrichtung ohne Wiederholung stellt sicher, daß auch gleichzeitig vorliegende Schwingungen in Querrichtung und Umfangsrichtung als solche erkannt werden.

Die Markierung kann durchgehend ausgebildet sein oder aus voneinander getrennten Segmenten bestehen. In Abhängigkeit von den Randbedingungen, beispielsweise der Drehzahl des Rotors, wird eine durchgehende Markierung oder eine Markierung aus voneinander getrennten Segmenten verwendet.

In vorteilhafter erster Ausgestaltung ist die Markierung materialeinstückig mit dem Deckband ausgebildet. Eine derartige Markierung läßt sich erzeugen, indem ein elektrisch leitfähiger Draht in der gewünschten Form auf die Oberfläche des Deckbands aufgelegt und mit einem Stromstoß beaufschlagt wird. Die Wirkung läßt sich durch eine magnetische Rückführung für den Fluß verstärken. Diese Markierung kann in praktisch beliebigen Formen rasch und kostengünstig hergestellt werden. Die strukturelle Integrität und die Oberfläche des Deckbands bleiben völlig unbeeinträchtigt. Anstatt des elektrisch leitfähigen Drahts können auch passend geformte Elektro- oder Dauermagneten temporär aufgesetzt werden.

Gemäß einer vorteilhaften zweiten Ausgestaltung weist die Markierung am Deckband befestigte Magneten auf. Diese Magneten können ohne Schwierigkeiten in bereits vorhandenen Rotationsmaschinen nachgerüstet werden.

Nach einer vorteilhaften Weiterbildung sind die Magneten in Ausnehmungen des Deckbands eingesetzt und in diesen befestigt. Das Einsetzen der Magneten in die Ausnehmungen ermöglicht eine durchgehende glatte Oberfläche des Deckbands.

Vorteilhaft sind mehrere über den Umfang des Gehäuses verteilte Sensoren vorgesehen. Die Verwendung mehrerer Sensoren erhöht die Genauigkeit und ermöglicht eine bessere Schwingungserfassung.

In vorteilhafter Weiterbildung ist der Rotor mit mindestens einem Indikator zur Bestimmung seiner Drehlage versehen. Über diesen Indikator und einen zugeordneten Signalgeber wird eine bestimmte Drehlage des Rotors als Null-Lage festgelegt. Ausgehend von dieser Null-Lage können die Drehzahl des Rotors sowie Schwingungen in Umfangsrichtung bestimmt werden.

Bei dem erfindungsgemäßen Verfahren ist zur Lösung der Aufgabe vorgesehen, daß das Deckband mit einer magnetischen Markierung versehen und diese magnetische Markierung über mindestens einen Sensor abgelesen wird.

Mit diesem Verfahren ist es erstmals möglich, Schwingungen von Schaufeln magnetisch zu erfassen, deren Spitzen über ein Deckband miteinander verbunden sind. Die Erfassung erfolgt berührungslos und ist eindeutig.

In vorteilhafter Ausgestaltung wird zur Erfassung von Schwingungen der Schaufeln das abgelesene Signal mit einem vorgegebenen Referenzsignal verglichen. Dieses Referenzsignal kann fest vorgegeben sein. Alternativ kann ein früher abgelesenes Signal als Referenzsignal verwendet werden. Aus einem Vergleich des abgelesenen Signals mit dem Referenzsignal wird die Veschiebung des Deckbands und damit der Schaufeln ermittelt. Wird ein fest vorgegebenes Signal als Referenzsignal verwendet, so können nicht nur Schwingungen sondern auch gleichbleibende Verschiebungen, beispielsweise auf Grund der thermischen Ausdehnung, erfaßt werden. Diese Verschiebungen gehen in das abgelesene Signal als statische Anteile ein. Die Schwingungen selbst bilden den dynamischen Anteil des abgelesenen Signals. Sollen lediglich die Schwingungen erfaßt werden, wird als Referenzsignal ein früher abgelesenes Signal verwendet. Die statischen Verschiebungen sind dann sowohl in dem Referenzsignal als auch in dem abgelesenen Signal enthalten, so daß bei der Auswertung lediglich die dynamischen Anteile verwendet werden.

Vorteilhaft werden mehrere Sensoren verwendet und die von den Sensoren abgelesenen Signale zur Erfassung der Schwingungen miteinander verknüpft. Dieses Vorgehen erhöht die Genauigkeit und ermöglicht eine zuverlässige Erfassung von Schwingungen über den gesamten Umfang der Rotationsmaschine.

In vorteilhafter Weiterbildung wird die Drehlage des Rotors über einen Signalgeber bestimmt und mit den Signalen des mindestens einen Sensors verknüpft. Hierdurch kann eine bestimmte Drehlage als Null-Lage des Rotors festgelegt werden, so daß Schwingungen in Umfangsrichtung einfach erkannt werden können. Der Signalgeber ermöglicht weiter eine Bestimmung der Drehzahl des Rotors.

Nachstehend wird die Erfindung anhand von Ausführungsbeispielen näher erläutert, die in schematischer Weise in der Zeichnung dargestellt sind. Für gleiche oder funktionsidentische Bauteile werden durchgehend dieselben Bezugszeichen verwendet. Dabei zeigt:
Figur 1 einen Längsschnitt durch eine Rotationsmaschine;
Figur 2 einen Schnitt längs der Linie II-II;
Figur 3 eine vergrößerte Darstellung der Einzelheit X aus Figur 2;
Figur 4 eine schematische Draufsicht auf ein Deckband in zweiter Ausgestaltung mit einem ersten Signal;
Figur 5 eine Ansicht ähnlich Figur 4 einer Messung entlang einer in Querrichtung verschobenen Umfangslinie; und
die Figuren 6 und 7 weitere Ausgestaltungen einer Markierung auf dem Deckband.

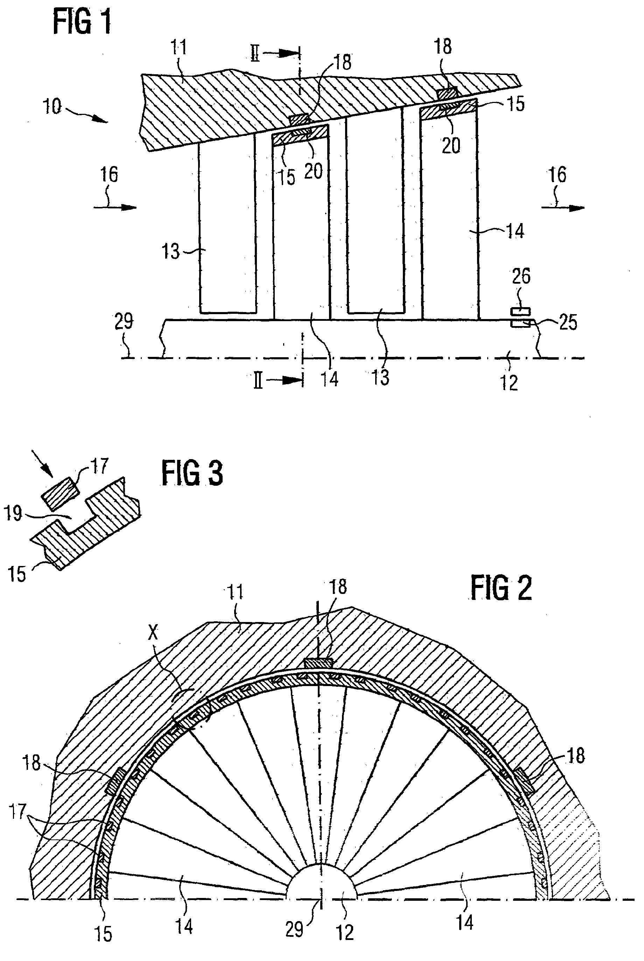

Figur 1 zeigt einen Längsschnitt durch eine Turbine 10 mit einem Gehäuse 11 und einem Rotor 12. Das Gehäuse 11 ist mit einer Reihe von Leitschaufeln 13 versehen, und der Rotor 12 trägt eine Anzahl von Laufschaufeln 14. Die Spitzen der Laufschaufeln 14 sind über ein Deckband 15 verbunden.

Die Turbine 10 wird in Pfeilrichtung 16 von einem Fluid durchströmt, das den Rotor 12 in Drehung um eine Achse 29 versetzt. Das Fluid strömt hierbei an den Leitschaufeln 13 und den Laufschaufeln 14 entlang. Zur Erfassung von Schwingungen der Laufschaufeln 14 ist das Deckband 15 mit einer magnetischen Markierung 20 versehen. Diese Markierung 20 wird von Sensoren 18 im Gehäuse 11 abgelesen.

Zur Bestimmung der Drehlage des Rotors 12 sind ein Indikator 25 und ein Signalgeber 26 vorgesehen. Bei jeder Umdrehung des Rotors 12 wird von dem Signalgeber 26 ein Signal ausgegeben. Die Drehlage des Rotors 12 kann somit eindeutig bestimmt und mit den Signalen der Sensoren 18 verknüpft werden. Vorteilhaft wird die Drehlage, in der der Indikator 25 dem Signalgeber 26 gegenüberliegt, als Null-Lage für den Rotor 12 festgelegt. Weiter ermöglicht der Signalgeber 26 eine Bestimmung der Drehzahl des Rotors 12.

Figur 2 zeigt einen Schnitt längs der Linie II-II in Figur 1 und Figur 3 eine vergrößerte Darstellung der Einzelheit X aus Figur 2. Bei dem in den Figuren 2 und 3 dargestellten Ausführungsbeispiel besteht die Markierung 20 des Deckbands 15 aus einer Reihe von Magneten 17. Diese Magneten 17 sind in Ausnehmungen 19 des Deckbands 15 eingesetzt und in diesen befestigt. Es ergibt sich eine im wesentlichen glatte durchgehende Oberfläche des Deckbands 15.

Zum Ablesen der Markierung 20 sind mehrere Sensoren 18 vorgesehen, die über den Umfang des Gehäuses 11 verteilt sind. Die von den Sensoren abgelesenen Signale werden in einer geeigneten, nicht näher dargestellten Datenverarbeitungseinrichtung miteinander verknüpft. Die Drehlage und Drehzahl des Rotors 12 werden über den Indikator 25 und den Signalgeber 26 bestimmt und mit den Signalen der Sensoren 18 verknüpft. Durch die gemeinsame Auswertung der Signale der Sensoren 18 und des Signalgebers 26 lassen sich Schwingungen der Laufschaufeln 14 und des Deckbands 15 präzise erfassen.

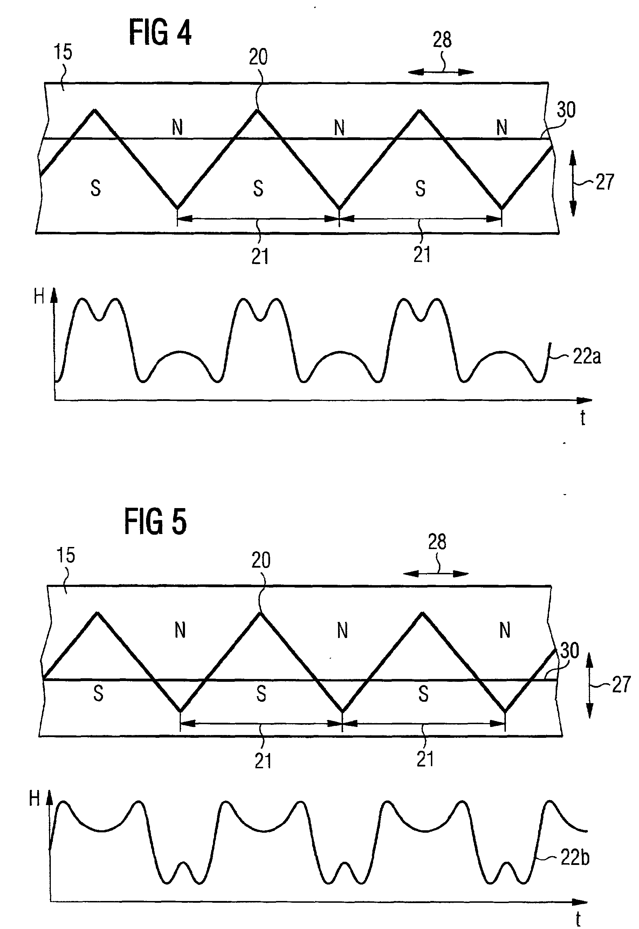

Die Figuren 4 und 5 zeigen ein Deckband 15 in der Abwicklung. Es ist eine einzige durchgehende Markierung 20 vorgesehen, die im wesentlichen zickzackförmig verläuft. Die Markierung 20 wird vorteilhaft dadurch hergestellt, daß ein elektrisch leitfähiger Draht auf das Deckband 15 aufgelegt und mit einem Stromstoß beaufschlagt wird. Sie ist einstückig mit dem Deckband 15 ausgebildet, so daß die Funktion des Deckbands nicht beeinträchtigt wird und die gewünschte Festigkeit erhalten bleibt.

Die Markierung 20 ist in Umfangsrichtung 28 periodisch und durchgehend ausgebildet. Sie ist aus einzelnen sich wiederholenden Abschnitten zusammengesetzt. Die magnetische Ausrichtung ist in den Figuren 4 und 5 schematisch durch die Buchstaben "N" und "S" gekennzeichnet.

Eine vollständige Änderung der magnetischen Ausrichtung von Nordpol zu Südpol ist nicht erforderlich. Erfindungsgemäß kann auch eine Änderung von einem starken magnetischen Nordpol zu einem schwächeren Nordpol vorgesehen werden. Die Südpole der magnetischen Markierung sind bei dieser Ausgestaltung radial einwärts in Richtung zur Achse 29 angeordnet. Selbstverständlich können auch die Südpole als Markierung vorgesehen werden und die Nordpole in Richtung zur Achse 29 versetzt sein.

Im Betrieb der Turbine 10 können Schwingungen der Laufschaufeln 14 sowohl in Querrichtung 27 als auch in Umfangsrichtung 28 auftreten. Die Messung erfolgt näherungsweise entlang einer Umfangslinie 30. Figur 4 zeigt eine Messung bei einer ersten Querposition des Deckbands 15 und Figur 5 eine Messung bei einer zweiten Querposition. Unterhalb der Abwicklung des Deckbands 15 ist das abgelesene Signal 22a, 22b dargestellt. Auf der Abszisse ist die Zeit t und auf der Ordinate die magnetische Feldstärke H aufgetragen. Selbstverständlich kann anstelle der Zeit t auch der Umfangswinkel oder eine andere geeignete Einheit verwendet werden.

Beim Betrieb der Turbine 10 ergibt sich ein sich periodisch wiederholendes Signal 22. Über den Indikator 25 und den Signalgeber 26 wird für jede Umdrehung des Rotors 12 ein neuer Null-Punkt festgelegt. Bei Schwingungen der Lauf schaufeln 14 und des Deckbands 15 in Umfangsrichtung 28 tritt eine Phasenverschiebung des Signals 22 entlang der Abszisse auf. Diese Phasenverschiebung wird erkannt und ermöglicht einen Rückschluß auf den Schwingungszustand der Laufschaufeln 14.

Bei Schwingungen in Querrichtung 27 ändert sich die Position der Umfangslinie 30, entlang der gemessen wird, gegenüber der Markierung 20. Es ergibt sich entsprechend ein anderes Signal 22b.

Zur Erfassung von Schwingungen werden die beiden abgelesenen Signale 22a, 22b miteinander verglichen. Eventuell in beiden Signalen 22a, 22b enthaltene statische Anteile, beispielsweise auf Grund einer thermischen Ausdehnung des Rotors 12 gegenüber dem Gehäuse 11, heben sich bei der Auswertung auf. Durch einen Vergleich des Signals 22b mit dem früher abgelesenen Signal 22a werden somit allein die Schwingungen des Deckbands 15 und damit der Schaufeln 14 erfaßt.

Das als Referenzsignal dienende Signal 22a kann fortlaufend neu festgelegt werden, beispielsweise bei jeder Umdrehung des Rotors 12. Alternativ kann ein Referenzsignal verwendet werden, das über mehrere Umdrehungen oder größere Zeiträume nicht verändert wird. Schwingungen der Schaufeln 14 werden auch in diesem Fall zuverlässig erfaßt. Gleichzeitig können statische Verschiebungen zwischen dem Gehäuse 11 und dem Rotor 12 erfaßt werden.

Im Extremfall wird ein Referenzsignal verwendet, das einmal vorgegeben und anschließend nicht verändert wird. Ein Vergleich des abgelesenen Signals 22a, 22b mit diesem Referenzsignal liefert Auskunft sowohl über statische Verschiebungen als auch über Schwingungen.

Es können gleichzeitig Schwingungen in Querrichtung 27 und in Umfangsrichtung 28 vorliegen. Auch diese Schwingungen müssen zuverlässig erfaßt werden können. Die Markierung 20 ist daher so ausgebildet, daß sie sich in Querrichtung des Deckbands 15 fortlaufend ohne Wiederholung derart ändert, daß die Sensoren 18 zu jeder Querposition des Deckbands 15 genau ein Signal 22 ablesen. Die Markierung 20 enthält somit einen ersten Informationsanteil für die Querrichtung 27 und einen zweiten Informationsanteil für die Umfangsrichtung 28. Diese beiden Informationsanteile können getrennt und unabhängig voneinander abgelesen werden. Wesentlich hierfür ist die fortlaufende Änderung der Markierung 20 in Querrichtung des Deckbands 15 ohne Wiederholung.

Werden beispielsweise zueinander parallele Striche gleicher Dicke als Markierung 20 verwendet, liegt keine Änderung in Querrichtung 27 des Deckbands 15 vor. Eine derartige Markierung würde somit nur die Erfassung von Schwingungen in Querrichtung 27 oder in Umfangsrichtung 28 ermöglichen. Schwingungen, die sowohl in Querrichtung 27 als auch in Umfangsrichtung 28 auftreten, können mit einer derartigen Markierung nicht mehr zuverlässig erfaßt werden.

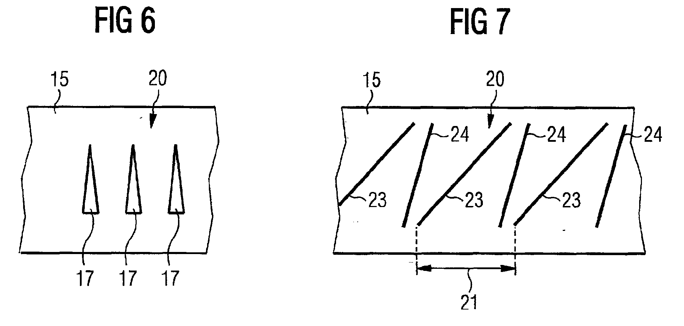

In den Figuren 6 und 7 sind weitere mögliche Ausgestaltungen von Markierungen 20 dargestellt. Figur 6 zeigt im wesentlichen keilförmige Magneten 17, die beabstandet zueinander in Ausnehmungen 19 des Deckbands 15 eingesetzt sind. Vorteilhaft weisen die Magneten 17 einen gleichbleibenden Abstand auf. Schwingungen in Querrichtung 27 werden über die Keilform der Magneten 17 erfaßt, während Schwingungen in Umfangsrichtung 28 über eine Phasenverschiebung erfaßt werden.

Alternativ kann eine Markierung 20 aus einzelnen, voneinander getrennten Segmenten 23, 24 gemäß Figur 7 verwendet werden. Die Segmente 23, 24 sind in sich wiederholenden Abständen 21 angeordnet und in Umfangsrichtung 28 des Deckbands 15 periodisch. Zur Erfassung von Schwingungen in Umfangsrichtung 28 wird wiederum die Phasenverschiebung des Signals 22 genutzt. Schwingungen in Querrichtung 27 werden über den sich ändernden Abstand zwischen den Segmenten 23, 24 erfaßt. Auch bei diesen Markierungen 20 erfolgt eine Verknüpfung mit dem Ausgangssignal des Signalgebers 26 zur Erfassung der Drehzahl und Drehlager des Rotors 12.

Die Erfindung stellt eine Rotationsmaschine und ein Verfahren bereit, die eine zuverlässige, berührungslose Erfassung der Schwingungen von Lauf schaufeln 14 mit einem Deckband 15 ermöglichen. Die Erfassung erfolgt mittels einer magnetisch erkennbaren Markierung 20 auf dem Deckband. Diese Markierung 20 ist vorteilhaft in Umfangsrichtung 28 des Deckbands periodisch und ändert sich in Querrichtung 27 fortlaufend ohne Wiederholung. Es können somit Schwingungen in Querrichtung 27 und in Umfangsrichtung 28 getrennt voneinander erfaßt werden.

## Patentansprüche

1. Rotationsmaschine mit einem Gehäuse (11) und einem in dem Gehäuse (11) aufgenommenen Rotor (12), der mit einer Anzahl von in Umfangsrichtung nebeneinander liegenden Schaufeln (14) versehen ist, deren Spitzen über ein Deckband (15) miteinander verbunden sind, **dadurch gekennzeichnet**, daß das Deckband (15) mit einer magnetisch erkennbaren Markierung (20) versehen ist und mindestens ein Sensor (18) zum Ablesen dieser magnetisch erkennbaren Markierung (20) vorgesehen ist.

2. Rotationsmaschine nach Anspruch 1, **dadurch gekennzeichnet**, daß die Markierung (20) in Umfangsrichtung (28) des Deckbands (15) periodisch verläuft.

3. Rotationsmaschine nach Anspruch 1 oder 2, **dadurch gekennzeichnet**, daß die Markierung (20) aus einzelnen, sich wiederholenden Abschnitten (21) zusammengesetzt ist.

4. Rotationsmaschine nach einem der Ansprüche 1 bis 3, **dadurch gekennzeichnet**, daß sich die Markierung (20) in Querrichtung (27) des Deckbands (15) fortlaufend ohne Wiederholung derart ändert, daß der Sensor (18) zu jeder Querposition des Deckbands (15) genau ein Signal (22) abliest.

5. Rotationsmaschine nach einem der Ansprüche 1 bis 4, **dadurch gekennzeichnet,** daß die Markierung (20) durchgehend ausgebildet ist oder aus voneinander getrennten Segmenten (23, 24) besteht.

6. Rotationsmaschine nach einem der Ansprüche 1 bis 5, **dadurch gekennzeichnet,** daß die Markierung (20) materialeinstückig mit dem Deckband (15) ausgebildet ist.

7. Rotationsmaschine nach einem der Ansprüche 1 bis 5, **dadurch gekennzeichnet**, daß die Markierung (20) am Deckband (15) befestigte Magneten (17) aufweist.

8. Rotationsmaschine nach Anspruch 7, **dadurch gekennzeichnet,** daß die Magneten (17) in Ausnehmungen (19) des Deckbands (15) eingesetzt und in diesen befestigt sind.

9. Rotationsmaschine nach einem der Ansprüche 1 bis 8, **dadurch gekennzeichnet**, daß mehrere über den Umfang des Gehäuses (11) verteilte Sensoren (18) vorgesehen sind.

10. Rotationsmaschine nach einem der Ansprüche 1 bis 9, **dadurch gekennzeichnet**, daß der Rotor (12) mit mindestens einem Indikator (25) zur Bestimmung seiner Drehlage versehen ist.

11. Verfahren zur berührungslosen Erfassung von Schwingungen von Schaufeln (14) an einem Rotor (12) in einer Rotationsmaschine (19), deren Spitzen über ein Deckband (15) miteinander verbunden sind, **dadurch gekennzeichnet,** daß das Deckband (15) mit einer magnetischen Markierung (20) versehen und diese magnetische Markierung (20) über mindestens einen Sensor (18) abgelesen wird.

12. Verfahren nach Anspruch 11, **dadurch gekennzeichnet**, daß zur Erfassung von Schwingungen der Schaufeln (14) das abgelesene Signal (22) mit einem vorgegebenen Referenzsignal verglichen wird.

13. Verfahren nach Anspruch 12, **dadurch gekennzeichnet**, daß als Referenzsignal ein fest vorgegebenes Signal oder ein früher abgelesenes Signal (22) verwendet wird.

14. Verfahren nach einem der Ansprüche 11 bis 13, **dadurch gekennzeichnet,** daß mehrere Sensoren (18) verwendet werden und die von den Sensoren (18) abgelesenen Signale (22) zur Erfassung der Schwingungen miteinander verknüpft werden.

15. Verfahren nach einem der Ansprüche 11 bis 14, **dadurch gekennzeichnet,** daß die Drehlage des Rotors (12) über einen Signalgeber (26) bestimmt und mit den Signalen (22) des mindestens einen Sensors (18) verknüpft wird.
